# EUROPEAN PATENT APPLICATION

(11) **EP 2 071 198 A2**
(43) Date of publication of application: **17.06.2009**
(21) Application number: 08253693.9
(22) Date of filing: 11.11.2008
(51) Int. Cl.: F16B 19/00

(54) **Coiled pin with flap stop**

(30) Priority: 12.12.2007 US 1543
(71) Applicant: Spirol International Corporation, Danielson, Connecticut 06239-1434 (US)
(72) Inventor: Jones, Christie L., Providence, Rhode Island 02906 (US); Jordan, Timothy A., Pomfret Center, Connecticut 06259 (US); Pasko, Michael J., Moosup, Connecticut 06354 (US); Mailloux, Marcia F., Moosup, Connecticut 06354 (US); Leckfor Jr., John J., Ledyard, Connecticut 06339 (US)
(74) Representative: Lacey, Dean Andrew

(57) **Abstract**

A coiled pin (14) comprises a rectangular strip (10) of metal coiled to form a substantially cylindrical pin having leading and trailing ends with a longitudinal edge (22) on the pin exterior extending between the leading and trailing ends. The longitudinal edge (22) has a transverse slit (12) closer to the leading end than to the trailing end, thereby forming a flap (24) having a width extending between the slit and the leading end and having a free end (22') aligned with the longitudinal edge (22). When the pin (14) is fully installed and the flap (24) is immediately adjacent the exit of a hole (34), the compression of the pin (14) at the hole exit (34) tends to expand the flap (24) beyond such natural relaxation, approaching its neutral diameter, thereby providing a more pronounced mechanical stop against withdrawal.

## Description

### Background

The present invention pertains to pins for joining rigid structures, and in particular, to so-called "coiled pins".

Coiled pins are formed by coiling strip metal into a substantially cylindrical shape, which can be driven into coaxially aligned holes of uniform diameter in adjacent members to be joined. The neutral pin diameter is selected to be slightly larger than the hole diameter, so when installed, the pin is compressed against the walls of the holes, securely retaining the pin and thus the joint. Several techniques are known to enhance the retention of the pin. To resist forces that tend to push the pin farther into the holes, the driven or trailing end of the pin can be flared. To resist forces that tend to pull the pin back out of the hole, a localized enlargement or oriented projection or "bump" is provided along the pin nearer to the leading end, which upon installation of the pin remains in the hole and is compressed against the wall to provide an intense but localized resistance to withdrawal of the pin. The latter can be used in combination with the flare at the driven end.

### Summary

It is an object of the present invention, to provide a coiled pin that is retained in a joint more effectively than known coiled pins.

The present disclosure is directed to an improved coiled pin, which resists withdrawal from the hole by a lead portion extending from the hole and having a flap which expands upon exiting the hole during installation. The expanded flap provides an effective diameter of the lead portion greater than the hole diameter.

The neutral diameter of the lead portion and main body of the pin are substantially the same before installation, so the lead portion is compressed while traversing the hole. Upon fully exiting the hole, the lead portion is expected to relax naturally to some extent toward the near neutral diameter. The inventors have found, however, that when the pin is fully installed and the flap is immediately adjacent the exit of the hole, the compression of the pin at the hole exit tends to expand the flap beyond such natural relaxation, approaching its neutral diameter, thereby providing a more pronounced mechanical stop against withdrawal.

Advantage of this phenomenon can be taken in another embodiment, whereby the trailing portion at the driven end of the pin can also have a flap with a neutral diameter the same as that of the body of the pin. Such flap extends back from and is located immediately adjacent the entrance to the hole. When the pin is fully installed and the flap is immediately adjacent the entrance to the hole, the compression of the pin at the hole entrance tends to expand the flap, thereby providing a more pronounced mechanical stop against forward displacement.

In further explanation, the portion of the pin that is retained in the hole will take on the diameter of the hole. The portion of the pin extending outside of the hole will try to "recover" back to its original pre-installed diameter. This is true for any coiled pin. The "recovery" is gradual in a standard (uncut) coiled pin, and the diameter of the pin farther away from the hole will be able to recover more than the diameter of the pin closer to the hole exit. However, in the case of the present pin, since a portion of the material is cut, it is free to recover toward its original diameter immediately after the cut material exits the hole. The pin will not recover entirely to the original diameter as there is some permanent set associated with pushing the pin through the hole. However, it will recover enough to prevent the pin from being pushed back through a properly prepared hole. This is due to the difference between the diameter of the recovered portion of the pin sticking out of the hole, and the compressed diameter of the pin that is retained in the hole.

In one aspect, the improved pin comprises a rectangular strip of metal coiled to form a substantially cylindrical pin having leading and trailing ends with a longitudinal edge on the pin exterior extending between the leading and trailing ends. The longitudinal edge has a transverse slit closer to the leading end than to the trailing end, thereby forming a flap having a width extending between the slit and the leading edge and having a free end aligned with the longitudinal edge.

In another aspect, the improvement comprises a rectangular strip of spring steel having a length and width defining opposed longitudinally extending edges and opposed transversely extending edges, wherein the strip is coiled to form a substantially cylindrical pin having a nominal circumference and having leading and trailing ends. An inner longitudinal edge lies substantially on the pin axis and an outer longitudinal edge lies on the pin exterior. The leading end has a chamfered nose and the trailing end is flared. The outer longitudinal edge has a transverse slit, closer to the leading end than to the trailing end that spans about 30-90 degrees, preferably about 45 degrees of the nominal circumference, thereby forming a flap having a width extending between the slit and the chamfered nose that is less than about 25% of the length of the pin and having a free end aligned with the outer longitudinal edge.

In yet another aspect, the improvement is directed to a pin connection between at least two adjacent rigid members having cylindrical walls defining coaxially aligned holes of the same diameter spanned by a coiled pin. The pin has a body portion within the holes of the rigid members, leading and trailing ends that respectively extend outside the holes beyond the rigid members, and a nominal diameter that is greater than the diameter of the holes such that the body portion is compressed against the cylindrical walls of the rigid members. An outer longitudinal edge lies on the pin exterior spanning the leading and trailing ends. The leading end has a chamfered nose and the outer longitudinal edge has a transverse slit between the rigid member and the nose, thereby forming a flap having a width extending between the slit and the nose. The flap has a free end separated outwardly from the longitudinal edge and thereby forms a leading stop that prevents the pin from being withdrawn from the hole toward the trailing end of the pin. Any form of enlargement can be provided at the trailing end of the pin outside the rigid member, thereby forming a trailing stop that prevents the pin from being drawn from the hole toward the leading end of the pin.

### Brief Description of the Drawing

Representative examples of the coiled pin will be described in detail below with reference to the accompanying drawing, in which:

Figures 1 and 2 show plan and end views of a thin rectangular strip of spring steel before coiling into a pin;

Figures 3 and 4 show plan and leading end views of a coil pin formed form the strip of Figures 1 and 2, in accordance with one embodiment;

Figure 5 is a partially sectioned view of the coiled pin of Figures 3 and 4 installed through a stack of three rigid members, the central member having rotational freedom relative to the other two members;

Figure 6 is an end view of the front end of the pin of Figure 5, showing the enlargement of the effective diameter due to the expansion of the flap;

Figure 7 is a schematic section view of another embodiment, having the flap at both leading and trailing portions of the coiled pin; and

Figures 8-10 show views of the flap at the exit of the pin as driven through a hole in a metal plate.

### Detailed Description

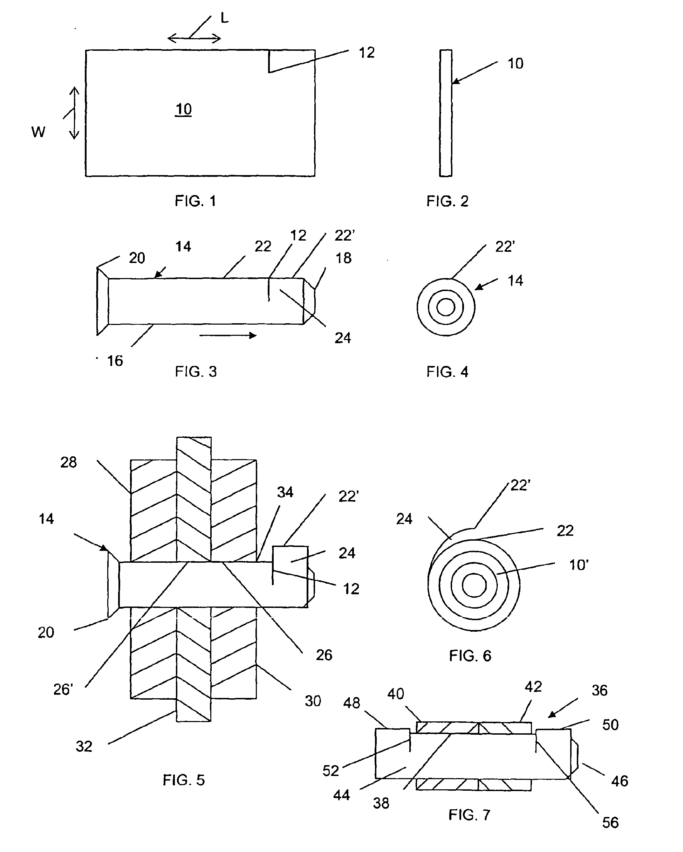

Figures 1 and 2 show a flat rectangular strip 10 of sheet metal, preferably spring steel, having a length L along opposed longitudinal edges and a width W along opposed transverse edges. A slit 12 is cut transversely into the longitudinal edge that will be on the exterior of the pin when the strip is coiled into the pin 14 as shown in Figures 3 and 4. The other longitudinal edge will be internal to the pin, close to the pin axis or centerline. The pin has a body 16, with the leading end chamfered to form a nose 18 or the like, whereas in this embodiment the trailing end 20 is flared. The slit 12 on the outer longitudinal edge 22 is closer to the leading end than to the trailing end, and preferably has a length that in the fabricated pin, spans about 30 to 90 degrees, most preferably about 45 degrees, of the nominal circumference, thereby forming a flap 24 having a width extending between the slit 12 and the chamfered nose 18 that is less than about 25% of the length L of the pin 14 and having a free end 22' aligned with the outer longitudinal edge 22.

As shown in Figures 3 and 4, the portion of the free end 22' forward of the slit 12 is not separated from the remainder of the body 16 of the pin, i.e., the neutral diameter remains uniform and the longitudinal edge 22 remains substantially straight between the nose 18 and the flare 20. The pin neutral diameter is selected for entry into holes of known diameter in the rigid members to be joined, such that the neutral pin diameter is larger than the hole diameter, by, for example, 5-8%. Initial entry of the leading end 18 into the hole is facilitated by the chamfer 18.

Figure 5 shows a rigid arm 32 or the like sandwiched between two rigid support members 28, 30 (for convenience referred to herein as left and right members), all three of which are joined by coiled pin 14. The rigid members 28, 30, and 32 have respective coaxial holes defined by walls of substantially uniform diameter, thereby forming a substantially uniform hole 26 having a cylindrical wall 26'. If arm 32 is designed to have rotational freedom, its hole can be larger than those of the members 28, 30. The pin is driven through the holes in the direction indicated by the arrow in Figure 3, until the flap portion 24 of the pin exits and extends from the hole of right member 30, while the flare 20 remains outside the hole on the left member 28.

The length of the pin 14 and flap 24 are selected for compatibility with both the diameter and the length of the hole wall 26', such that the hole wall 26' compresses the body 16 of the pin along the length of the wall 26', producing an interference fit that rigidly joins at least members 28 and 30, and the slit 12 on flap 24 is close to the exit 34 of the right member 30.

Figures 5 and 6 show that the resulting expansion or radially outward restoration deformation of the flap 24, increases the effective diameter of the pin adjacent the nose, thereby forming a mechanical stop that resists forces that would cause the pin to retract through the hole 26. It is believed that the compression of the neutral diameter of the pin body 16 at 34 has the consequence of influencing the flap 24 to deform outwardly. The radial deformation of the flap 24 shown in Figures 5, 6 (and 7) is enhanced for illustrative purposes. The closer the slit 12 remains to the hole exit 34, the more pronounced is the outward restoration of the flap 24.

During installation, the pin diameter is compressed as it enters the hole 26, and the material on either side of the slit is likely pushed together due to the columnar forces generated along the axis of the pin. Once the pin has been installed, this columnar force is no longer present, and the material on either side of the slit 12 is able to act fairly independently. The pin 14 stays in the hole by exerting a constant radial force against the hole wall 26'. The diameter of the pin that is retained in the hole will take on the diameter of the hole. Any portion of the pin not retained in the hole will try and recover back toward its original preinstalled diameter. The tapering or chamfer 18 at the nose also predisposes the material behind it, i.e., the flap 24, to open up under these conditions. The degree to which the flap 24 recovers depends on the distance the slit 12 is from the retaining hole 26.

To prevent the material at the slit from catching on the edge of the hole during installation, all entrances (leading edges) to the holes should have a lead-in radius. However, the exit hole should have a sharp edge to prevent the pin from pressing back into the hole. If a radius were present in the hole, this may enable the flap to compress and get pushed back out of the hole under force in the opposite direction from which it was installed. A sharp edge will not allow the material to get pushed back into the hole as the raised material will get caught (or snagged) on the sharp edge. The distance between the edge of the hole at 34 and slit 12 should not exceed one pin diameter, preferably ½ pin diameter. For a 0.250" (approximately 6mm) pin, the distance should not exceed 0.250" (approximately 6mm), but the closer the better.

Figure 7 shows another embodiment of a joint 36 wherein a hole 38 passes through two rigid members 40, 42, and a different pin 44 is compressed against the hole wall. This pin 44 has a lead end 46 that is similar to that described with respect to Figures 5 and 6, including slit 56 and flap 50 expanded outwardly. Instead of the flare 20 shown in Figure 3, the trailing end also has a slit 52 formed thereon in the same manner as the slit 56 at the leading end, with the resulting outward expansion of the flap 48. In the pre-installed condition corresponding to Figure 3, this embodiment has the outer longitudinal edge with a transverse slit 52 closer to the trailing end than to the leading end, thereby forming a flap 48 having a width extending between the slit 52 and the trailing end, and having a free end aligned with the outer longitudinal edge.

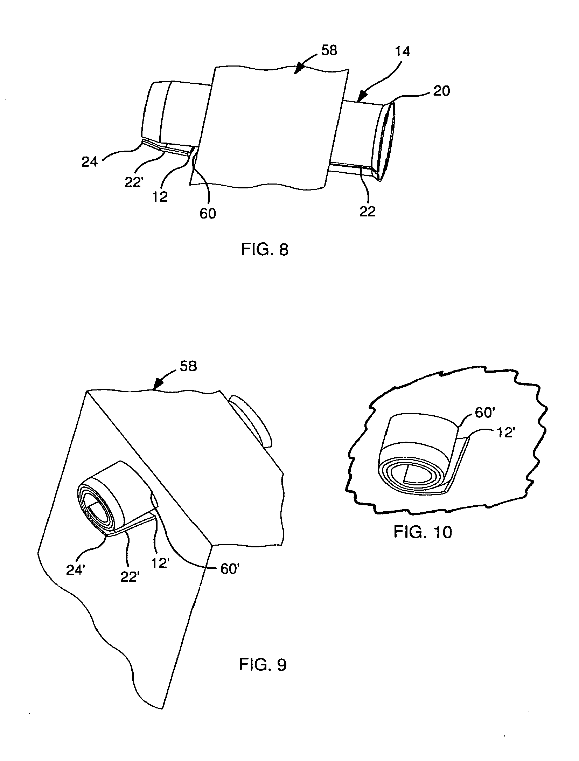

Figures 8-10 show details of a pin 14 driven through a hole in a single steel plate 58. Figure 8 shows the flare 20 of the pin on the right hand, and the flap 24 of the pin on the left. The slit 12 in the material is located just beyond the surface 60 of the steel plate and the flap 24 is able to "recover" toward its original diameter, preventing it from being pushed back out of the hole.

Figs. 9 and 10 show that the material of the flap 24' is able to recover or "open up" even more at the area of the pin that has been cut, when the slit 12' is positioned even closer to the edge 60' of the steel than in Figure 8. The material is starting to recover where it is unsupported, toward the original diameter.

It can be appreciated that for some special end uses where the installed pin must not withdraw backwardly from the hole but should be amenable to removal forwardly, the pin according the invention need not have a flared trailing end.

## Claims

1. A coiled pin (14, 44) comprising: a rectangular strip (10) of metal having a length and width defining opposed longitudinally extending edges and opposed transversely extending edges, said strip (10) being coiled to form a substantially cylindrical pin having leading and trailing ends at said transversely extending edges, wherein one longitudinal edge (22) lies on the pin exterior; said one longitudinal edge (22) having a transverse slit (12, 56) closer to said leading end than to said trailing end, thereby forming a flap (24, 50) having a width extending between said slit (12, 56) and said leading end and having a free end (22') aligned with said one longitudinal edge (22).

2. A coiled pin according to claim 1, wherein the trailing end of the pin is flared.

3. A coiled pin according to claim 1 or claim 2, wherein said one longitudinal edge has another transverse slit, closer to said trailing end than to said leading end, thereby forming another flap having a width extending between said slit and said trailing end, and having a free end aligned with said one longitudinal edge.

4. A coiled pin according to any preceding claim, wherein the pin has a nominal circumference and the slit spans about 30-90 degrees of the circumference.

5. A coiled pin according to any preceding claim, wherein the width of the flap is less than about 25% of the length of the pin.

6. A coiled pin according to any preceding claim, wherein the rectangular strip comprises spring steel and is coiled so that the cylindrical pin has a nominal circumference with an inner longitudinal edge lying adjacent the pin axis and an outer longitudinal edge, lying on the pin exterior, on which the transverse slit is provided and with which the free end of the flap is aligned.

7. A coiled pin according to any preceding claim, wherein the leading end of the pin has a chamfered nose such that said flap has a width extending between said slit and said chamfered nose.

8. A pin connection between at least two adjacent rigid members (28, 30) having cylindrical walls defining coaxially aligned holes of the same diameter spanned by a coiled pin (14, 44), said pin comprising: a body portion (16) within the holes of the rigid members (28, 30) and leading and trailing ends that respectively extend outside the holes beyond the rigid members (28, 30), and a nominal diameter that is greater than the diameter of said holes such that the body portion (16) is compressed against the cylindrical walls of the rigid members (28, 30); and an outer longitudinal edge (22) that lies on the pin exterior; said leading end having a chamfered nose (18) and said outer longitudinal edge having a transverse slit (12, 56) between the rigid member (30) and the nose (18), thereby forming a flap (24, 50) having a width extending between said slit (12, 56) and said nose (18), said flap (24, 50) having a free end (22') separated outwardly from the longitudinal edge (22) and thereby forming a leading stop that prevents the pin from being withdrawn from the hole toward the trailing end of the pin; and an enlarged portion at the trailing end of the pin outside the rigid member (28), thereby forming a trailing stop that prevents the pin from being withdrawn from the hole toward the leading end of the pin.

9. A pin connection according to claim 8, wherein the slit is located within about 1/2 to about one pin diameter from the rigid member.

10. A pin connection according to claim 8 or claim 9, wherein the nominal pin diameter is in the range of about 5-8% greater than the diameter of the holes.

11. A pin connection according to any of claims 8 to 10, wherein two distinct rigid members are joined in abutting relationship.

12. A pin connection according to any of claims 8 to 11, wherein a central rigid member is sandwiched between two outer rigid members, the body portion of the pin spans all the members, and the diameter of the hole in the central member is larger than the diameter of the holes in the outer members such that the central member is pivotable around the body portion of the pin.

13. A pin connection according to any of claims 8 to 12, wherein the trailing end of the pin is flared.

14. A pin connection according to any of claims 8 to 13, wherein said outer longitudinal edge has another transverse slit between the other rigid member and the trailing end, thereby forming another flap having a width extending between said other slit and said trailing end, said other flap having a free end separated outwardly from the longitudinal edge and thereby forming said enlarged portion as trailing stop that prevents the pin from being withdrawn from the hole toward the leading end of the pin.

15. A pin connection according to any of claims 8 to 14, wherein the hole adjacent the trailing end of the pin has a beveled lead-in and the hole at the leading end of the pin has a sharply formed exit.
